# EUROPEAN PATENT SPECIFICATION

(11) **EP 4 478 509 B1**
(45) Date of publication and mention of the grant of the patent: **11.11.2026**
(21) Application number: 23918892.3
(22) Date of filing: 28.04.2023
(51) Int. Cl.: H01M 50/24, H01M 50/204, H01M 50/375

(54) **BATTERY PACK AND DEVICE INCLUDING SAME**
BATTERIEPACK UND VORRICHTUNG DAMIT
BATTERIE ET DISPOSITIF LA COMPRENANT

(43) Date of publication of application: 18.12.2024
(73) Proprietor: LG Energy Solution, Ltd., Seoul 07335 (KR)
(72) Inventor: LEE, Suhang, Daejeon 34122 (KR); CHOI, Yongseok, Daejeon 34122 (KR)
(74) Representative: Plasseraud IP
(86) International application number: PCT/KR2023/005846
(87) International publication number: WO 2024/225505

(56) References cited:
- WO-A1-2022/244994
- CN-A- 113 594 598
- CN-A- 114 552 091
- CN-U- 218 498 269
- JP-B2- 6 438 971
- KR-A- 20180 112 617
- KR-A- 20220 134 305
- KR-A- 20220 147 265
- US-A1- 2023 057 172

## Description

### [TECHNICAL FIELD]

The present disclosure relates to a battery pack and a device including the same, and more particularly, to a battery pack that can maintain the structure of the battery pack when thermal runaway or thermal propagation phenomena occur inside the battery pack, and a device including the same.

### [BACKGROUND]

Due to its characteristics of being easily applicable to various products and electrical properties such as a high energy density, a secondary battery is not only commonly applied to a portable device, but universally applied to an electric vehicle or a hybrid electric vehicle and an energy storage system that is propelled by an electric motor. This secondary battery is gaining attention for its primary advantage of remarkably reducing the use of fossil fuels and not generating by-products from the use of energy, making it a new eco-friendly and energy efficient source of energy.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Generally, the lithium secondary battery may be classified based on the shape of the exterior material into a cylindrical or prismatic secondary battery in which the electrode assembly is embedded in a metal can, and a pouch-type secondary battery in which the electrode assembly is embedded in a pouch made of an aluminum laminate sheet.

Recently, along with a continuous rise of the necessity for a large-capacity secondary battery structure, including the utilization of the secondary battery as an energy storage source, there is a growing demand for a battery pack of a medium- and large-sized module structure which is an assembly of battery modules in which a plurality of secondary batteries are connected in series or in parallel. In such a battery module, a plurality of battery cells are connected to each other in series or in parallel to form a battery cell stack, thereby improving capacity and output. In addition, a plurality of battery modules may be mounted together with various control and protection systems such as a BMS (battery management system) and a cooling system to form a battery pack.

The battery pack is configured to have a structure in which a plurality of battery modules is combined. In a case in which overvoltage, overcurrent, or overheating is applied to some of the battery modules, safety and operation efficiency of the battery pack are seriously concerned.

In particular, the capacity of the battery pack tends to increase gradually in order to improve mileage, and as the energy inside the pack increases accordingly, it is necessary to design a structure that satisfies strengthened safety standards and secures the safety of the vehicle and driver.

In this regard, when thermal runaway inside the battery pack and thermal propagation phenomena between battery cells occur, deformation of components of the battery pack may occur due to high-temperature gas and particles inside the battery pack. In particular, in such a high-temperature environment, the structure may be changed, such as the lid, which is the upper pack frame of the battery pack, being sagged in the direction of gravity, which may cause the problem that an upper venting passage of the battery pack is clogged. If the upper venting passage of the battery pack is clogged like this, there is a problem that discharge of high-temperature gas and particles inside the battery pack is delayed, which may lead to explosion and fire of the battery pack. Accordingly, in order to prevent such situations in advance, there is a growing need to develop a battery pack capable of minimizing damage by preventing the upper venting passage of the battery pack from being clogged even when thermal runaway or thermal propagation phenomena occur inside the battery pack.

### [Prior art document]

CN 218 498 269 U according to its title discloses a battery pack.

US 2023/057172 according to its title discloses flame-retardant compositions for energy storage devices, methods of manufacture thereof and batteries containing the same.

WO 2022/244994 according to its title discloses a battery pack having gas venting path.

CN 113 594 598 according to its title discloses a battery module and a battery pack.

### [DETAILED DESCRIPTION OF THE INVENTION]

### [Technical Problem]

It is an object of the present disclosure to provide a battery pack that can maintain the structure of the battery pack when thermal runaway or thermal propagation phenomena occur inside the battery pack, and a device including the same.

The objects of the present disclosure are not limited to the aforementioned objects, and other objects which are not mentioned herein should be clearly understood by those skilled in the art from the following detailed description and the accompanying drawing.

### [Technical Solution]

According to one embodiment of the present disclosure, there is provided a battery pack according to claim 1.

The fixing member is a bolting member, and the lifting member and the inner frame may be bolt-coupled together.

The lifting member may extend along the width direction of the battery module.

The inner frame includes at least one horizontal beam extending along the width direction of the battery module, and at least two vertical beams extending along the longitudinal direction of the battery module, and the at least one lifting part may extend along the same direction as the horizontal beam.

The at least one lifting part includes a pair of lifting parts located to be spaced apart from each other, and the pair of lifting parts may be located between the horizontal beam and one side surface of the lower pack frame facing the horizontal beam.

The at least one lifting part is located on the at least two vertical beams, and the fixing member may fix the lifting member to the at least two vertical beams, respectively.

The lifting member may have a shape in which the upper part of the lifting member is formed of relatively more materials than the lower part of the lifting member.

The lifting member may have a cross section of one of a V-shape, a U-shape, a T-shape, an inverted triangle, and a semicircle.

The lifting member may be made of a steel material.

According to another embodiment of the present disclosure, there is provided a device comprising the above-mentioned battery pack.

### [Advantageous Effects]

According to the embodiments, a battery pack of the present disclosure and a device including the same include a lifting member between the upper pack frame and the inner frame of the battery pack, thereby capable of maintaining the structure of the battery pack when thermal runaway or thermal propagation phenomena occur inside the battery pack.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

FIG. 1 is a perspective view showing a battery pack according to an embodiment of the present disclosure;
FIG. 2 is an exploded perspective view of components included in the battery pack of FIG. 1;
FIG. 3 is a perspective view showing a structure in which an upper pack frame and a plurality of battery modules are removed from the battery pack of FIG. 1;
FIG. 4 is a view showing the shape of a lifting member included in the battery pack of FIG. 1;
FIG. 5 is a view showing a portion of a cross section cut along the a-a' axis of FIG. 3; and
FIGS. 6 and 7 are diagrams showing a portion of a cross section cut along the b-b' axis of FIG. 3.

### [DETAILED DESCRIPTION OF THE EMBODIMENTS]

Hereinafter, various embodiments of the present disclosure will be described in detail with reference to the accompanying drawings so that those skilled in the art can easily carry out them.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Now, a battery pack according to an embodiment of the present disclosure will be described.

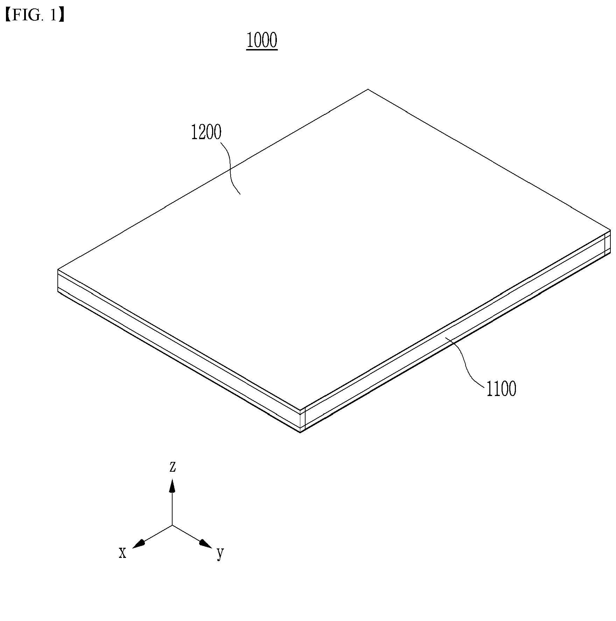

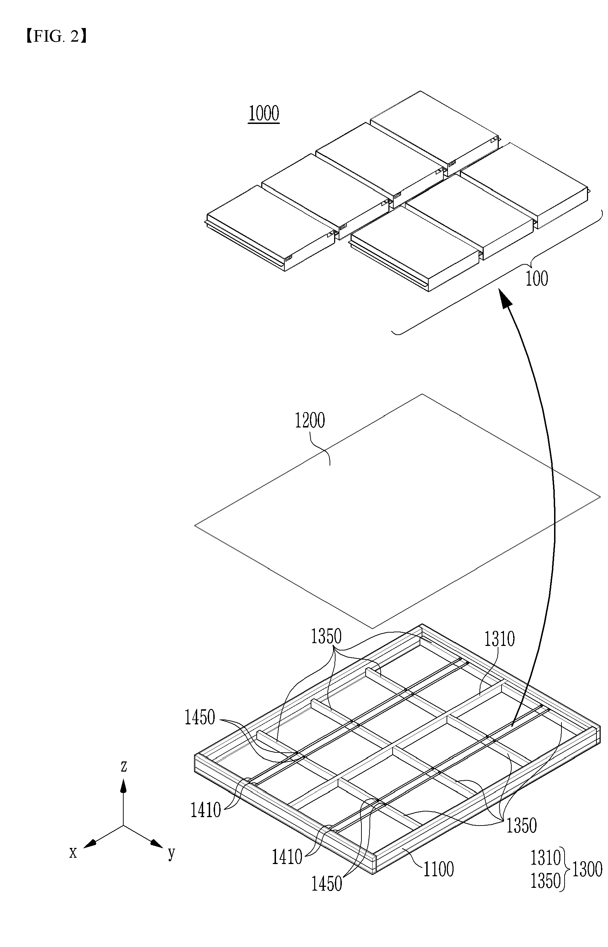

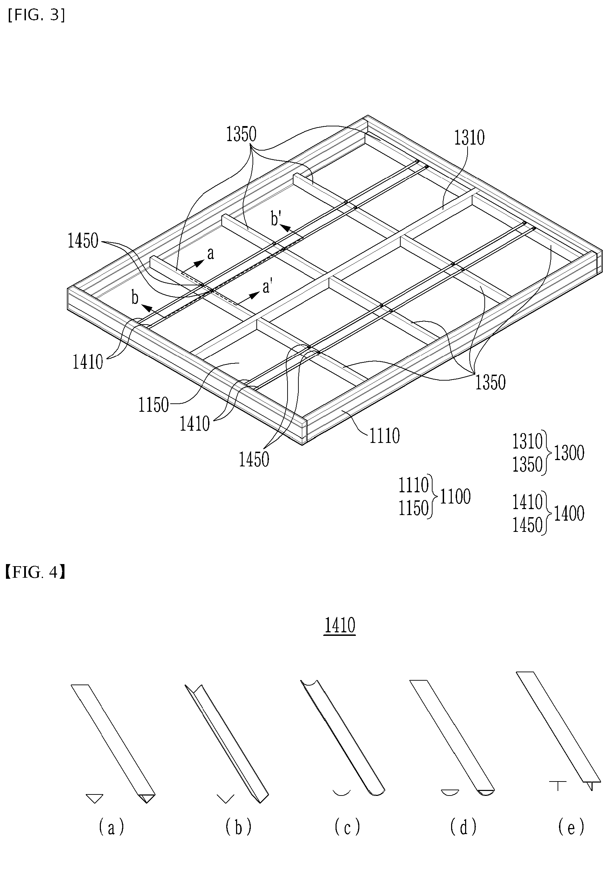

FIG. 1 is a perspective view showing a battery pack according to an embodiment of the present disclosure. FIG. 2 is an exploded perspective view of components included in the battery pack of FIG. 1. FIG. 3 is a perspective view showing a structure in which an upper pack frame and a plurality of battery modules are removed from the battery pack of FIG. 1.

Referring to FIGS. 1 and 2, the battery pack according to an embodiment of the present disclosure includes pack frames 1100 and 1200 to which a plurality of battery modules are mounted, and an inner frame 1300 that is located inside the pack frames 1100 and 1200 and partitions the plurality of battery modules 100 from each other.

Here, the pack frames 1100 and 1200 may include a lower pack frame 1100 to which a plurality of battery modules 100 are mounted, and an upper pack frame 1200 that is located on an upper part of the battery module 100. More specifically, the upper pack frame 1200 may cover the upper part of the lower pack frame 1100 in a state where the plurality of battery modules 100 are mounted on the lower pack frame 1100. Here, the lower pack frame 1100 and the upper pack frame 1200 are coupled to each other by a method such as welding or bonding, thereby capable of sealing the inside of the battery pack 1000.

Referring to FIGS. 1 to 3, the lower pack frame 1100 may include an outer frame 1110 that extends from a bottom surface of the pack frames 1100 and 1200 toward the upper pack frame 1200, and a pack bottom part 1150 facing a lower surface of the battery module 100. That is, the outer frame 1110 may extend toward the upper pack frame 1200 from the pack bottom part 1150.

In the lower pack frame 1100, the outer frame 1110 and the pack bottom part 1150 may be integrated with each other or fixed to each other by a separate fastening method such as welding or bonding.

In one example, the outer frame 1110 may be made of a heat insulating member. In another example, the outer frame 1110 is made of a dissimilar metal bonding material such as clad metal, or may be a structure including an insulating material such as air-gel or EPP(expanded polypropylenes) foam. In another example, the outer frame 1110 may be a structure including a material such as silicon foam, mica, or a glass fiber pad. However, it is not limited thereto, and the outer frame 1110 can be used without limitation as long as it is made of a heat insulating material having a predetermined stiffness.

Further, the lower pack frame 1100 may include an inner frame 1300 being located inside the outer frame 1110, and extending from the pack bottom part 1150 to the upper pack frame 1200. More specifically, the inner frame 1300 includes at least one horizontal beam 1310 and at least two vertical beams 1350.

The horizontal beam 1310 may extend along the width direction (x-axis direction) of the battery module 100. Further, the vertical beam 1350 is located between one side of the outer frame 1110 and the horizontal beam 1310, and may extend along the longitudinal direction (y-axis direction) of the battery module 100. Here, one side surface of the outer frame 1110 may mean a side surface of the outer frame 1110 facing the horizontal beam 1310.

The plurality of battery modules 100 may be partitioned from each other by at least one horizontal beam 1310 and at least two vertical beams 1350. That is, the inner space partitioned by at least one horizontal beam 1310 and at least two vertical beams 1350 may be a module area to which the battery module 100 is mounted, respectively, and may be an area where other electric components other than the battery module 100 are mounted.

However, the configuration of the inner frame 1300 is not limited thereto, and can be included in the present embodiment as long as it is a shape in which a plurality of battery modules 100 can be mounted while partitioning them each other. Further, the length, interval, and number of at least one horizontal beam 1310 and at least two vertical beams 1350 may be adjusted according to the size and arrangement of the battery module 100.

In one example, the inner frame 1300 may be made of a heat insulating member. In another example, the inner frame 1300 is made of a dissimilar metal bonding material such as clad metal, or may be a structure including an insulating material such as air-gel or EPP(expanded polypropylenes) foam. In another example, the inner frame 1300 may be a structure including a material such as silicon foam, mica, or a glass fiber pad. However, it is not limited thereto, and the inner frame 1300 may be used without limitation as long as it is made of a heat insulating material having a predetermined stiffness.

Therefore, in the battery pack 1000 according to the present embodiment, the lower pack frame 1100 may be located to be spaced apart as the plurality of battery modules 100 are partitioned from each other by the outer frame 1110 and the inner frame 1300, and even if an ignition phenomenon occurs in some battery modules 100 among a plurality of battery modules 100, a heat propagation phenomenon between adjacent battery modules 100 can be effectively prevented.

Referring to FIG. 2, the battery pack 1000 according to the present embodiment may include a plurality of battery modules 100. Here, the battery module 100 may be mounted on the lower pack frame 1100. More specifically, the plurality of battery modules 100 may be respectively mounted to the area partitioned by the outer frame 1110 and the inner frame 1300, as shown in FIGS. 2 and 3. However, the arrangement direction of the battery module 100 is not limited thereto, and may be appropriately changed as needed.

In one example, the battery module 100 includes a battery cell stack (not shown), in which a plurality of battery cells are stacked, and a module frame (not shown) that houses the battery cell stack (not shown).

The battery cell is preferably a pouch type battery cell. In one example, the battery cell may be produced by housing the electrode assembly in a pouch case of a laminate sheet including a resin layer and an inner layer, and then heat-sealing a sealing part of the pouch case. The battery cell may be formed in a rectangular sheet-like structure. The battery cells may be configured by a plurality of numbers, and the plurality of battery cells are stacked so as to be electrically connected to each other, thereby forming a battery cell stack (not shown). Here, the number of battery cells forming the battery cell stack (not shown) may be adjusted according to circumstances.

The module frame (not shown) may include an upper cover and a U-shaped frame. Here, the U-shaped frame may include a bottom part and two side surface parts extending upward from both ends of the bottom part. At this time, the bottom part may cover the lower surface of the battery cell stack (not shown), and the side surface part may cover the side surface of the battery cell stack (not shown). The upper cover can be coupled to the U-shaped frame by welding or the like in a state in which the corner portions corresponding to each other are in contact with each other, to thereby form a structure that covers the top, bottom, left and right of the battery cell stack (not shown). For this purpose, the upper cover and the U-shaped frame may be made of a metal material having a predetermined strength.

However, the structure of the module frame (not shown) is not limited thereto, and in another embodiment, the module frame (not shown) may have a structure of a mono frame. Here, the mono frame may be in the form of a metal plate material in which the upper surface, the lower surface, and both side surface are integrated. The mono frame can be made by extrusion molding. In addition, the structure of the module frame (not shown) may be provided in the form of an L-shaped frame in addition to a mono frame or a U-shaped frame, and may be provided in various structures not described in the above examples.

Additionally, the battery module 100 may further include busbar frames located on the front and rear surfaces of the battery cell stack (not shown) and end plate covering the busbar frame. Here, a busbar (not shown) electrically connected to a battery cell stack (not shown) may be located in the busbar frame. Accordingly, the end plate can physically protect the battery cell stack (not shown) and other electrical components from external impact.

Next, the lifting part 1400 included in the battery pack 1000 according to an embodiment of the present disclosure will be mainly described.

Referring to FIGS. 2 and 3, the battery pack 1000 according to an embodiment of the present disclosure may include at least one lifting part 1400 located between the inner frame 1300 and the upper part of the pack frames 1100 and 1200. More specifically, at least one lifting part 1400 may be located between the inner frame 1300 and the upper pack frame 1200. In other words, at least one lifting part 1400 may be located in a space where the inner frame 1300 and the upper pack frame 1200 are spaced apart from each other.

At least one lifting part 1400 may extend along the width direction (x-axis direction) of the battery module 100. More specifically, at least one lifting part 1400 may extend along the same direction (x-axis direction) as the horizontal beam 1310. Here, the lifting part 1400 may extend between one side surface and the other side surface of the outer frame 1110 at a position facing each other on the lower pack frame 1100.

In one example, at least one lifting part 1400 may include a pair of lifting parts 1400 as shown in FIGS. 2 and 3. Here, the pair of lifting parts 1400 may be located between the horizontal beams 1310 and one side surface of the lower pack frame 1100 facing the horizontal beams 1310. Further, the pair of lifting parts 1400 may be located to be spaced apart from each other.

However, the number and arrangement of the lifting parts 1400 are not limited thereto, and can be included in the present embodiment as long as they are the number and/or arrangement capable of preventing sagging of the upper pack frame 1200 of the battery pack 1000 when thermal runaway occurs inside the battery pack 1000.

The lifting part 1400 may include a lifting member 1410 bent in an upward direction of the pack frames 1100 and 1200 if the temperature inside the pack frames 1100 and 1200 rises. More specifically, the lifting member 1410 may be a material whose length expands when the temperature inside the pack frame 1100 or 1200 rises. Further, as described below, as the lifting member 1410 is fixed to the inner frame 1300 by the fixing member 1450, the lifting member 1410 may be bent toward the upper pack frame 1200 when expending in length.

In one example, the lifting member 1410 may be a material that expands at a temperature of 1500 degrees Celsius or less at room temperature. Here, the room temperature means a temperature of 15 degrees Celsius to 25 degrees Celsius, and may have the same meaning as the commonly used room temperature.

Accordingly, in the battery pack 1000 according to the present embodiment, it is possible to prevent the sagging phenomenon due to structural deformation of the upper pack frame 1200 even while capable of supporting the upper pack frame 1200, within the temperature range from room temperature, which is the environment in which the battery pack 1000 is generally used, to a high-temperature environment where the thermal runaway phenomenon occurred in the battery pack 1000.

The lifting member 1410 may extend along the width direction (x-axis direction) of the battery module 100. More specifically, the lifting member 1410 may extend along the same direction (x-axis direction) as the horizontal beam 1310. Here, the lifting member 1410 may extend between one side surface and the other side surface of the outer frame 1110 at a position facing each other on the lower pack frame 1100.

The lifting member 1410 may include a pair of lifting members 1410 as shown in FIGS. 2 and 3. Here, the pair of lifting members 1410 may be located between the horizontal beams 1310 and one side surface of the lower pack frame 1100 facing the horizontal beams 1310. In addition, the pair of lifting members 1410 may be located to be spaced apart from each other.

However, the number and arrangement of the lifting members 1410 are not limited thereto, and can be included in the present embodiment as long as there are the number and/or arrangement capable of preventing sagging of the upper pack frame 1200 of the battery pack 1000 when thermal runaway phenomenon occurs inside the battery pack 1000.

FIG. 4 is a view showing the shape of a lifting member included in the battery pack of FIG. 1.

The lifting member 1410 may have a shape in which an upper part of the lifting member 1410 is formed of relatively more materials than a lower part of the lifting member 1410. In one example, as shown in FIG. 4, the lifting member 1410 may have a cross section of one of a V-shape, a U-shape, a T-shape, an inverted triangle, and a semicircle.

Accordingly, the lifting member 1410 may be bent into a portion having relatively large more materials in a high-temperature environment due to a rise in temperature inside the battery pack 1000. That is, the lifting member 1410 may be bent toward the upper part of the lifting member 1410. In other words, the lifting member 1410 may be bent in a direction toward the upper pack frame 1200.

However, the shape of the lifting member 1410 is not limited thereto, and can be included in the present embodiment as long as it is a shape capable of being bent toward the upper part of the pack frames 1100 and 1200 in a high-temperature environment due to a rise in temperature inside the battery pack 1000.

In one example, the lifting member 1410 may be made of a steel material. However, it is not limited thereto, and can be included in the present embodiment as long as it has heat resistance and can be bent toward the upper part of the pack frames 1100 and 1200 in a high-temperature environment according to the temperature rise inside the battery pack 1000.

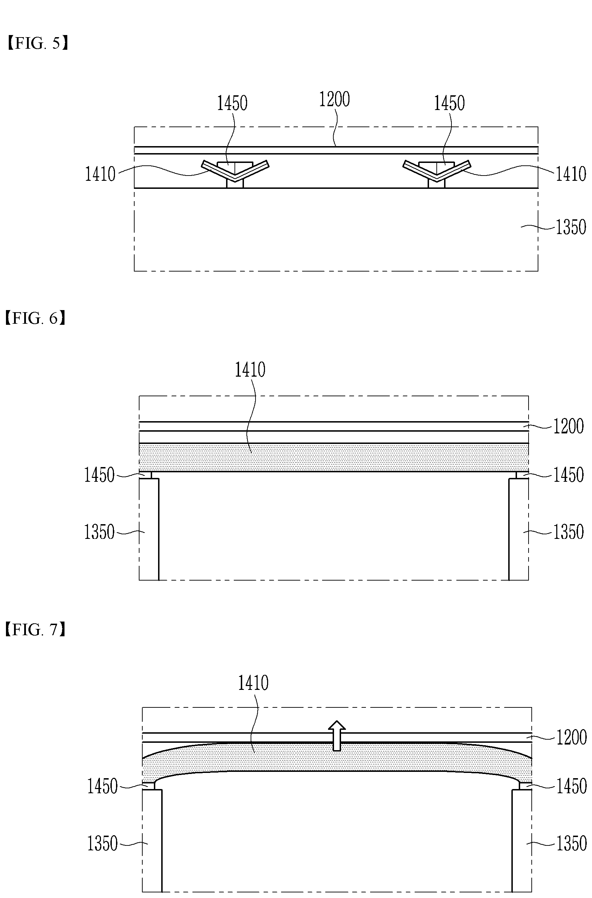

FIG. 5 is a view showing a portion of a cross section cut along the a-a' axis of FIG. 3.

Referring to FIGS. 3 to 5, the lifting part 1400 may include at least one fixing member 1450 that fixes the lifting member 1410 to the inner frame 1300. More specifically, at least one fixing member 1450 is disposed at a position where the lifting member 1410 and the inner frame 1300 come into contact with each other, so that the lifting member 1410 and the inner frame 1300 can be fixed to each other. In one example, as shown in FIG. 3, at least one lifting member 1410 is located on at least two vertical beams 1350, and the at least one fixing member 1450 may fix the at least one lifting member 1410 to the at least two vertical beams 1350, respectively. That is, in the battery pack 1000 according to the present embodiment, the lifting member 1410 may not be fixed to the upper pack frame 1200.

In one example, the fixing member 1450 is a bolting member, and the lifting member 1410 and the inner frame 1300 may be bolt-coupled together. However, the coupling method and shape of the fixing member 1450 are not limited thereto, and can be include in the present disclosure as long as it is a method and shape capable of fixing the lifting member 1410 to the inner frame 1300.

FIGS. 6 and 7 are diagrams showing a portion of a cross section cut along the b-b' axis of FIG. 3.

Referring to FIGS. 5 and 6, structural deformation of the lifting part 1400 may not occur in a normal state of the battery pack 1000. Unlike the same, when the temperature inside the pack frames 1100 and 1200 rises, the lifting part 1400 may be bent in a direction toward the upper part of the pack frames 1100 and 1200 as shown in FIG. 7. In other words, the lifting part 1400 may be bent in a direction toward the upper pack frame 1200.

That is, the lifting member 1410 may expand in the longitudinal direction in a high-temperature environment according to a rise in temperature inside the battery pack 1000. Here, a part of the lifting member 1410 is fixed to the inner frame 1300 by the fixing member 1450, so that the lifting member 1410 can be bent toward the upper pack frame 1200 as it expands in the longitudinal direction.

More specifically, the lifting member 1410 may be configured such that a portion located between portions fixed by the fixing member 1450 is bent in a direction toward the upper part of the pack frames 1100 and 1200. In other words, the lifting member 1410 may be configured such that a portion located between the portions fixed by the fixing member 1450 is bent in a direction toward the upper pack frame 1200.

Accordingly, in the battery pack 1000 according to the present embodiment, the bending direction of the lifting part 1400 is guided toward the upper pack frame 1200, so that the lifting part 1400 can support the upper pack frame 1200 and increase structural stiffness of the battery pack 1000.

In addition, the lifting part 1400 prevents a sagging phenomenon due to structural deformation of the upper pack frame 1200, so that the lifting part 1400 can prevent a gas venting passage formed between the upper pack frame 1200 and the plurality of battery modules 100 from being clogged. That is, in the battery pack 1000 according to the present embodiment, gas generated inside the battery pack 1000 can be easily discharged to the outside even when a thermal runaway phenomenon occurs inside the battery pack 1000, and additional heat propagation or explosion situations can be prevented or delayed.

According to another embodiment of the present disclosure, there can be provided a device comprising the above-mentioned battery pack. Such a device can be applied to vehicle means such as an electric bike, an electric vehicle, and a hybrid electric vehicle, but the present disclosure is not limited thereto, and is applicable to various devices that can use a battery module and a battery pack including the same, which also falls under the scope of the present disclosure.

Although the invention has been described in detail with reference to preferred embodiments of the present disclosure, the scope of the present disclosure is not limited thereto, and various modifications and improvements can be made by those skilled in the art using the basic concepts of the present disclosure, which are defined in the appended claims.

### [Description of Reference Numerals]

100: battery module
1000: battery pack
1100: lower pack frame
1200: upper pack frame
1300: inner frame
1400: lifting part
1410: lifting member
1450: fixing member

## Claims

1. A battery pack (1000) comprising:
a pack frame including a lower pack frame (1100) to which a plurality of battery modules (100) are mounted and an upper pack frame (1200) that covers an upper part of the lower pack frame (1100) in a state where the plurality of battery modules (100) are mounted on the lower pack frame (1100);
an inner frame (1300) that is located inside an outer frame (1110) of the lower pack frame (1100) and partitions a plurality of battery modules (100) from each other;
**characterised in that** it further comprises at least one lifting part (1400) that is located between the inner frame (1300) and the upper pack frame (1200) and that is deformed according to the temperature inside the pack frame,
wherein the lifting part (1400) includes:
- a lifting member (1410) that is bent in a direction toward the upper pack frame (1200) when the temperature inside the pack frame rises due to a thermal runaway that occurs in the battery pack, and
- at least one fixing member (1450) that fixes the lifting member (1410) to the inner frame (1300),
wherein the lifting member (1410) is configured such that a portion located between the portions fixed by the fixing member (1450) is bent in a direction toward the upper part of the pack frame when the temperature inside the pack frame rises due to a thermal runaway that occurs in the battery pack.

2. The battery pack of claim 1, wherein:
the fixing member (1450) is a bolting member, and
the lifting member (1410) and the inner frame (1300) are bolt-coupled together.

3. The battery pack of claim 1, wherein:
the lifting member (1410) extends along the width direction of the battery module (100).

4. The battery pack of claim 3, wherein:
the inner frame (1300) includes at least one horizontal beam extending along the width direction of the battery module, and at least two vertical beams extending along the longitudinal direction of the battery module, and
the at least one lifting part (1400) extends along the same direction as the horizontal beam.

5. The battery pack of claim 4, wherein:
the at least one lifting part (1400) includes a pair of lifting parts located to be spaced apart from each other, and
the pair of lifting parts are located between the horizontal beam and one side surface of the lower pack frame (1100) facing the horizontal beam.

6. The battery pack of claim 4, wherein:
the at least one lifting part (1400) is located on the at least two vertical beams, and
the fixing member (1450) fixes the lifting member (1410) to the at least two vertical beams, respectively.

7. The battery pack of claim 1, wherein:
the lifting member (1410) has a shape in which an upper part of the lifting member is formed of relatively more materials than a lower part of the lifting member.

8. The battery pack of claim 7, wherein:
the lifting member (1410) has a cross section of one of a V-shape, a U-shape, a T-shape, an inverted triangle, and a semicircle.

9. The battery pack of claim 1, wherein:
the lifting member (1410) is made of a steel material.

10. A device comprising the battery pack of claim 1.

## Patentansprüche

1. Batteriepack (1000), umfassend:
einen Packrahmen, der einen unteren Packrahmen (1100), an dem eine Vielzahl von Batteriemodulen (100) montiert ist, und einen oberen Packrahmen (1200) einschließt,
der einen oberen Teil des unteren Packrahmens (1100) in einem Zustand abdeckt, in dem die Vielzahl von Batteriemodulen (100) auf dem unteren Packrahmen (1100) montiert ist;
einen Innenrahmen (1300), der innerhalb eines Außenrahmens (1110) des unteren Packrahmens (1100) angeordnet ist und eine Vielzahl von Batteriemodulen (100) voneinander trennt;
**dadurch gekennzeichnet, dass** er ferner mindestens ein Anhebebauteil (1400) umfasst, das zwischen dem Innenrahmen (1300) und dem oberen Packrahmen (1200) angeordnet ist und das sich entsprechend der Temperatur im Inneren des Packrahmens verformt,
wobei das Anhebebauteil (1400) einschließt:
- ein Anhebeelement (1410), das in eine Richtung zum oberen Packrahmen (1200) hin gebogen wird, wenn die Temperatur im Inneren des Packrahmens aufgrund eines thermischen Durchgehens, das im Batteriepack auftritt, ansteigt, und
- mindestens ein Befestigungselement (1450), das das Anhebeelement (1410) am Innenrahmen (1300) befestigt,
wobei das Anhebeelement (1410) so konfiguriert ist, dass ein Abschnitt, der zwischen den durch das Befestigungselement (1450) befestigten Abschnitten angeordnet ist, in eine Richtung zum oberen Teil des Packrahmens hin gebogen wird, wenn die Temperatur im Inneren des Packrahmens aufgrund eines thermischen Durchgehens, das im Batteriepack auftritt, ansteigt.

2. Batteriepack nach Anspruch 1, wobei:
das Befestigungselement (1450) ein Verschraubungselement ist, und
das Anhebeelement (1410) und der Innenrahmen (1300) miteinander verschraubt sind.

3. Batteriepack nach Anspruch 1, wobei:
sich das Anhebeelement (1410) entlang der Breitenrichtung des Batteriemoduls (100) erstreckt.

4. Batteriepack nach Anspruch 3, wobei:
der Innenrahmen (1300) mindestens einen horizontalen Träger, der sich entlang der Breitenrichtung des Batteriemoduls erstreckt, und mindestens zwei vertikale Träger, die sich entlang der Längsrichtung des Batteriemoduls erstrecken, einschließt, und
sich das mindestens eine Anhebebauteil (1400) entlang der gleichen Richtung wie der horizontale Träger erstreckt.

5. Batteriepack nach Anspruch 4, wobei:
das mindestens eine Anhebebauteil (1400) ein Paar von Anhebebauteilen einschließt, die so angeordnet sind, dass sie voneinander beabstandet sind, und
das Paar von Anhebebauteilen zwischen dem horizontalen Träger und einer Seitenfläche des unteren Packrahmens (1100), die dem horizontalen Träger zugewandt ist,
angeordnet ist.

6. Batteriepack nach Anspruch 4, wobei:
das mindestens eine Anhebebauteil (1400) auf den mindestens zwei vertikalen Trägern angeordnet ist, und
das Befestigungselement (1450) das Anhebeelement (1410) jeweils an den mindestens zwei vertikalen Trägern befestigt.

7. Batteriepack nach Anspruch 1, wobei:
das Anhebeelement (1410) eine Form aufweist, bei der ein oberer Teil des Anhebeelements aus verhältnismäßig mehr Material als ein unterer Teil des Anhebeelements ausgebildet ist.

8. Batteriepack nach Anspruch 7, wobei:
das Anhebeelement (1410) einen Querschnitt in Form eines V, eines U, eines T, eines umgekehrten Dreiecks oder eines Halbkreises aufweist.

9. Batteriepack nach Anspruch 1, wobei:
das Anhebeelement (1410) aus einem Stahlmaterial gefertigt ist.

10. Vorrichtung, umfassend das Batteriepack nach Anspruch 1.

## Revendications

1. Bloc-batterie (1000) comprenant :
un cadre de bloc incluant un cadre de bloc inférieur (1100) sur lequel une pluralité de modules de batterie (100) sont montés et un cadre de bloc supérieur (1200) qui couvre une partie supérieure du cadre de bloc inférieur (1100) dans un état où la pluralité de modules de batterie (100) sont montés sur le cadre de bloc inférieur (1100) ;
un cadre intérieur (1300) qui est situé à l'intérieur d'un cadre extérieur (1110) du cadre de bloc inférieur (1100) et qui sépare une pluralité de modules de batterie (100) les uns des autres ;
**caractérisé en ce qu'**il comprend en outre au moins une pièce de levage (1400) qui est située entre le cadre intérieur (1300) et le cadre de bloc supérieur (1200) et qui est déformée en fonction de la température à l'intérieur du cadre de bloc,
dans lequel la pièce de levage (1400) inclut :
- un élément de levage (1410) qui est courbé dans une direction vers le cadre de bloc supérieur (1200) lorsque la température à l'intérieur du cadre de bloc augmente en raison d'un emballement thermique qui se produit dans le bloc-batterie, et
- au moins un élément de fixation (1450) qui fixe l'élément de levage (1410) au cadre intérieur (1300),
dans lequel l'élément de levage (1410) est configuré de telle sorte qu'une portion située entre les portions fixées par l'élément de fixation (1450) est courbée dans une direction vers la partie supérieure du cadre de bloc lorsque la température à l'intérieur du cadre de bloc augmente en raison d'un emballement thermique qui se produit dans le bloc-batterie.

2. Bloc-batterie selon la revendication 1, dans lequel :
l'élément de fixation (1450) est un élément de boulonnage, et
l'élément de levage (1410) et le cadre intérieur (1300) sont accouplés par boulonnage.

3. Bloc-batterie selon la revendication 1, dans lequel :
l'élément de levage (1410) s'étend le long de la direction de la largeur du module de batterie (100).

4. Bloc-batterie selon la revendication 3, dans lequel :
le cadre intérieur (1300) inclut au moins une poutre horizontale s'étendant le long de la direction de la largeur du module de batterie, et au moins deux poutres verticales s'étendant le long de la direction longitudinale du module de batterie, et
l'au moins une pièce de levage (1400) s'étend le long de la même direction que la poutre horizontale.

5. Bloc-batterie selon la revendication 4, dans lequel :
l'au moins une pièce de levage (1400) inclut une paire de parties de levage situées de manière à être espacées l'une de l'autre, et
la paire de parties de levage est située entre la poutre horizontale et une surface latérale du cadre de bloc inférieur (1100) faisant face à la poutre horizontale.

6. Bloc-batterie selon la revendication 4, dans lequel :
l'au moins une pièce de levage (1400) est située sur les au moins deux poutres verticales, et
l'élément de fixation (1450) fixe l'élément de levage (1410) aux au moins deux poutres verticales, respectivement.

7. Bloc-batterie selon la revendication 1, dans lequel :
l'élément de levage (1410) a une forme dans laquelle une partie supérieure de l'élément de levage est formée de relativement plus de matériaux qu'une partie inférieure de l'élément de levage.

8. Bloc-batterie selon la revendication 7, dans lequel :
l'élément de levage (1410) a une section transversale en forme de V, de U, de T, de triangle inversé ou de demi-cercle.

9. Bloc-batterie selon la revendication 1, dans lequel :
l'élément de levage (1410) est fait d'un matériau en acier.

10. Dispositif comprenant le bloc-batterie selon la revendication 1.
